(19) Europäisches Patentamt

European Patent Office

Office européen des brevets

(11) **EP 0 440 397 B1**

(12) **EUROPEAN PATENT SPECIFICATION**

(45) Date of publication and mention
of the grant of the patent:
**20.03.1996 Bulletin 1996/12**

(51) Int. Cl.$^6$: **B23K 26/00**

(21) Application number: **91300626.8**

(22) Date of filing: **28.01.1991**

(54) **Method for laser cutting metal plates**

Verfahren zum Laserschneiden von metallischen Platten

Méthode de coupage au laser de plaques métalliques

(84) Designated Contracting States:
**DE FR GB IT LU NL**

(30) Priority: **29.01.1990 US 471603**

(43) Date of publication of application:
**07.08.1991 Bulletin 1991/32**

(73) Proprietor: **E.I. DU PONT DE NEMOURS AND COMPANY**
**Wilmington Delaware 19898 (US)**

(72) Inventors:
• **Kobsa, Henry**
**Greenville, Delaware 19807 (US)**
• **Moore, Samuel Earl, Sr.**
**Claymont, Delaware 19703 (US)**

(74) Representative: **Jones, Alan John et al**
**CARPMAELS & RANSFORD**
**43 Bloomsbury Square**
**London, WC1A 2RA (GB)**

(56) References cited:
• **FEINWERKTECHNIK & MESSTECHNIK. vol. 87, no. 7, October 1979, DE pages 309 - 320; J. Steffen: "Prozessoptimierung bei materialabtragenden Bearbeitungsproblemen mit Laserstrahlung"**
• **LASER UND OPTOELEKTRONIK. vol. 20, no. 2, April 1988, STUTTGART DE pages 48 - 51; J.M. WEICK et al.: "Neue Aspekte zum Trennen von Metallen mit CO2-Lasers"**
• **LASER UND OPTOELEKTRONIK. vol. 17, no. 3, September 1985, STUTTGART DE pages 2822 - 290; E. Beyer et al.: "Schneiden mit Laserstrahlung"**

## Description

This invention relates to a method for cutting metal plates and, more particularly, it relates to cutting orifices in spinneret plates with a laser beam.

Spinneret capillaries fall into two categories: cylindrical orifices and complex shapes. Cylindrical shapes are easily made by drilling with conventional twist drill bits. Two known technologies for making complex shapes are punching and electric discharge machining (EDM). Punching has severe limitations. More particularly, it is not possible to punch slots which are deeper than about twice their width (L/W<2) . This makes it difficult to control the shape of the filaments and their size since the slightest deviations from the nominal slot width cause significant variations in polymer flow.

An EDM method for making complex spinning orifices involves making an electrode the shape of the orifice to be produced and cutting through the spinneret plate using an electric discharge usually while both the spinneret and the electrode are submerged in an oil bath. There are two problems with this: the high cost of making the electrodes (they do not last very long); and the slow speed of the process.

Feinwerktechnik und Messtechnik, vol 87, N° 7, Oct. 1979 pp 309-320 discloses laser erosion processes, such as drilling, cutting, scoring etc. This paper discusses the relationship between the machining varieties and the laser parameters to be selected and the limits of the processes. It is stated that continuous or repetitively pulsed laser radiation is used for cutting and scoring. There is no disclosure of focussing a single-mode beam on a location above the surface of the material to be cut or of focussing a single-mode beam to a spot size producing a slot of less than 100 μm.

Laser und Optoelecktronik vol 17, N° 3, Sept. 1985, pp 282-290 discloses $CO_2$, Nd: yttrum, aluminium garnet and excimer laser interactions and cutting processes therewith, e.g. cutting by sublimation, fusion and oxygen reaction.

Cutting complicated spinneret orifices with lasers has been considered because of the potential advantages:

(1) Any material could be used; not just metals, but also ceramics; anything that one would like to use for durability, corrosion resistance, etc.
(2) Laser cutting is potentially fast and inexpensive. No special tools have to be made such as in punching or EDM. Cutting speed is, in general, not limited by the laser, but only by the ability to move the workpiece (spinneret) around fast enough. One can readily switch from one capillary design to another by software changes to the computer-controller.
(3) There is no significant restriction on L/W. However, until now, laser cutting of spinneret orifices has failed.

There are four key obstacles one must overcome to make acceptable slots for spinneret orifices:

(1) The slots must be narrower (~60μ) than can be provided by conventional lasers (100μ-300μ).
(2) The slots must have straight sides -- within a tolerance of about ± 1μ. This is very difficult to do with a solid state laser. Clean cutting of metals requires an energy density of at least about 40 MW/cm². If the beam diameter is 40 μ, over 500 W of laser energy would be required. While solid state lasers of this power are available, their beam quality is much too poor to be focused to a 40 μ spot. Moreover, to avoid overheating the work piece, cutting speed would have to be about 2 m/min. This is quite impossible since equipment does not exist which can move a spinneret which may weigh as much as 10 kg at such a speed through the intricate patterns required to form complex spinneret capillaries. In particular, one must be able to stop within about 1 μ. Even with the best available commercial positioning stages, cutting speeds cannot be much higher than 0.05 m/min if spinneret design tolerances are to be met. The laser must be operated in a pulsed mode with a low duty cycle of, at most, a few percent. However, pulsed operation of a solid state laser creates another problem: thermal lensing and, as a result, a beam which wanders from side to side and produces a wavy cut which is unacceptable for a spinneret orifice. Thermal lensing is caused by heating of the laser crystal by the flash lamps. The heating is never perfectly uniform, even though laser manufacturers take great pains to minimize this problem, and so the crystal distorts during each flash. (3) A problem which is not normally seen with wider cuts is related to the fact that the metals comprising the spinneret are oxidized during the cutting (for efficient metal removal cutting must be performed in an oxidizing atmosphere, e.g., 4 Bar of pure oxygen). The metal oxide vapors condense behind the advancing laser beam and form small particles which stick to the molten metal along the sides of the cuts and, at times, actually bridge the gap between the sides of the cut. Unfortunately, this problem cannot be corrected by some sort of mechanical clean-up, since broaches with an L/W of 10 or more and a diameter of, e.g., 60 μ, have insufficient shear strength and break without removing the oxide particles.

## SUMMARY OF THE INVENTION

According to the invention, a method for cutting through a metal plate, eg complex capillaries in spinneret plates, said plate having upper and lower surfaces includes the steps of directing a pulsed multi-mode laser energy source beam toward the upper surface of the spinneret plate to create a molten pool of metal between the upper and lower surfaces of the plate and expelling the molten metal from the lower surface by means of a pressurized fluid flowing coaxial with said beam is improved by reducing the pulsed multi-mode laser beam to substantially a single-mode beam and focusing the single mode beam above the upper surface of the plate. Preferably the beam is in substantially a TEMoo mode with a pulse length less than 200 micro-seconds and the pulsed beam has a frequency in the range of from about 130 Hz to about 185 Hz. The capillaries are generally slotted and are formed by moving the plate relative to the beam in at least two passes.

## BRIEF DESCRIPTION OF THE DRAWINGS

Fig. 1 is a schematic representation of an apparatus useful in practicing the method of this invention.

Fig. 2 is a plan view of a complex spinneret capillary made using the method of this invention.

## DETAILED DESCRIPTION OF THE PREFERRED EMBODIMENT

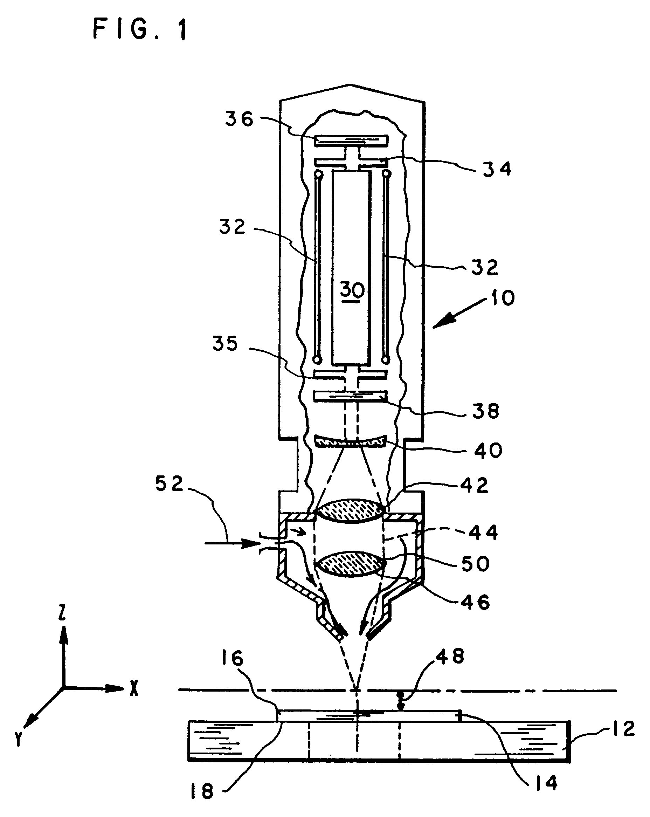

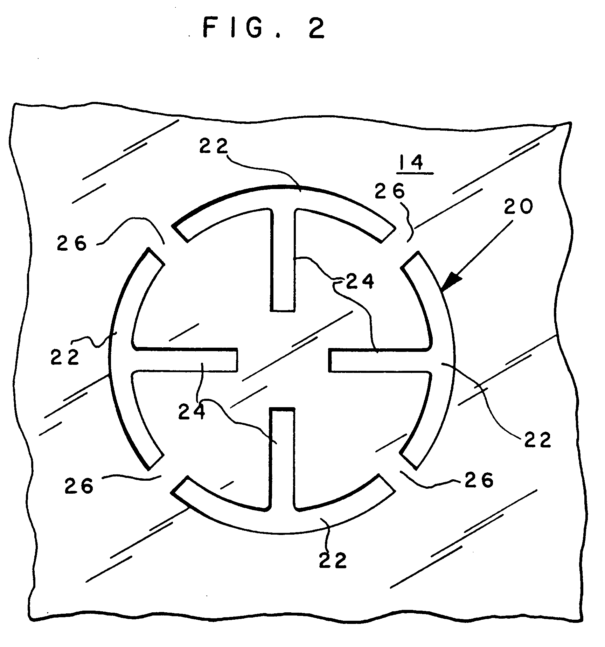

Fig. 1 illustrates the preferred apparatus for practicing the invention and generally includes a pulsed multimode laser energy source 10, mounted for movement in the X, Y and Z planes (represented by direction arrows) relative to Table 12 carrying a spinneret plate 14 which has an upper surface 16 and a lower surface 18. The spinneret plate when formed will contain a plurality of complex shaped capillaries 20. The capillary 20 is known as a slot-type capillary which in this case (Fig. 2) comprises four peripheral slot-type openings 22 surrounding an inner minute area. Extending radially inward short of a common intersection are four straight slot-type openings 24 joining the peripheral opening 22 at their centers. Air vents 26 separate peripheral slots 22.

The pulsed-multi mode energy source is a solid state laser such as a neodium-yttrium aluminum garnet (Nd - YAG) rod 30 activated by a plurality of xenon (max. 700 V) flash tubes 32. A preferred Nd - YAG laser is a model LAY50-2 from Haas-Laser GmbH, Schramberg, West Germany. Typically the Nd - YAG laser allows many modes to run simultaneously which results in somewhat poor beam quality. To remedy this, two 3.2 mm apertured discs 34, 35 are inserted inside the laser cavity between the back and front mirrors 36, 38, respectively.

By inserting two 3.2 mm diameter apertures between the crystal and the two mirrors, the number of modes was reduced to substantially a predominantly TEMoo mode which greatly improved the beam quality. Nd YAG lasers normally have a very low divergence, so it was possible to trade some increased divergence for decreased focal radius since the product of the two is sensibly constant for a given laser and operating conditions. This was done in the following way. A planarconcave lens 40 with a focal length of -20 mm was placed on the optical axis outside the outcoupling mirror 38. A biconvex lens 42 with a focal length of +100 mm was placed confocally with the planarconcave lens 40 on the optical axis. This produced a colimated beam 44 with a diameter of 16 mm. A second biconvex lens also having a focal length of +100 mm focussed the beam to a spot with a diameter of about 35 to 40 $\mu$. The larger beam diameter before focussing increases divergence about 5X and decreases beam diameter also by about 5X. However, at about 2 mrad, divergence was still quite acceptable for the instant purposes.

In the pulsed operation, the pulses should be as short as possible, but a Nd YAG laser needs some minimum time to build up a laser discharge. We exhaustively explored all possible combinations of pulse duration, frequency, and lamp voltage and found that, with the laser we had, it was not practical to use lamp pulses much shorter than 200 $\mu$s.

In operation, 130 Hz was found to be a good repetition (rep) rate for the instant purposes. For smooth cutting, the rep rate should be reasonably high. At 50 mm/s cutting speed and a rep rate of 130 Hz, the work piece moves approximately 6 $\mu$ between pulses. It should not move much further than that. On the other hand, at rep rates much above 130 Hz, laser power dropped off and the laser would not run at more than 185 Hz at 500 V lamp voltage and a lamp pulse duration of 200 $\mu$s. Higher rep rates could be obtained with shorter lamp pulses; for example, with 175 $\mu$s lamp pulses, frequencies of about 150-160 Hz at some loss in average power could be obtained. At 500 V lamp voltage and with a pulse duration of 200 $\mu$s, the laser pulse is 125 $\mu$s long for a duty cycle of 1.6% at 130 Hz.

It was found that the quality of the cuts improved continuously as the voltage of lamps 32 was decreased in small steps to 485 V. However, much below 485 V the laser could no longer punch through the metal to start a new cut. The laser was then operating at 11 W or 85 mJ/pulse. 70% of the beam energy fell into a circle of 32 $\mu$ diameter and 90% fell into a circle of 42 $\mu$. A key requirement is to deliver short, tightly focussed pulses of about 40 MW/cm$^2$ with a low enough duty cycle to avoid overheating the workpiece at the necessarily low cutting speeds. The optimal operating conditions will vary somewhat with the chemical composition and thickness of the metal being cut.

Metal removal is a key issue in metal cutting. Cutting nozzles are commonly employed. The mechanical strength of the focussing lens 50 limits gas pressure to about 5 Bar, although some laboratories have achieved 10 Bar and more by special designs. A gas supply 52 at 5 Bar was used which means that when the nozzle was cutting the actual pressure was about 4 Bar. Of several cutting gases tried, pure oxygen worked best. The distance between the cutting nozzle and the workpiece was critical (100+10 $\mu$ over a distance of about 400 mm).

There is at least one more key requirement: the beam 44 must be focussed not on the plate 14, but rather some distance 48 (about .2 mm) above the upper surface 16 of the plate. This is accomplished through focussing lens 50.

## Claims

1. A method for cutting through a metal plate (14) having upper and lower surfaces that includes the steps of directing a pulsed multi-mode laser energy source beam (10) toward the upper surface (16) of said plate to create a molten pool of metal between the upper and lower surfaces (16, 18) of the plate and expelling the molten metal from the lower surface by means of a pressurized fluid (52) flowing coaxial with said beam, and reducing the multi-mode laser beam to substantially a single-mode beam; characterized by focusing said single-mode beam above the upper surface (16) of said plate (14).

2. The method of claim 1, said single-mode beam being in a TEMoo mode.

3. The method of claim 1 or claim 2, wherein the pulse length of said beam is less than about 200 microseconds.

4. The method of claim 3, wherein the pulsed beam has a frequency from about 130 Hz to about 185 Hz.

5. The method of any one of claims 1 to 4 wherein said pressurized fluid (52) is oxygen.

6. The method of any one of claims 1 to 5 wherein spinneret capillaries defined by slots (22) are cut in said plate (14) by moving said plate in at least one pass relative to the beam in a path defined by said slot.

7. The method of claim 6, wherein said plate (14) is moved in at least two passes.

8. The method of claim 6, wherein said plate (14) is moved in at least three passes.

## Patentansprüche

1. Verfahren zum Durchschneiden einer Metallplatte (14) mit einer oberen und einer unteren Fläche, welches die folgenden Schritte umfaßt:
Lenken eines gepulsten Vielfachmode-Laserenergiequellenstrahls (10) auf die obere Fläche (16) der Platte, um einen Schmelzpool des Metalls zwischen der oberen und der unteren Fläche (16, 18) der Platte zu erzeugen und um das geschmolzene Metall von der unteren Fläche mit Hilfe eines unter Druck gesetzten Fluids (52) auszustoßen, welches koaxial zum Strahl strömt, und reduzieren des Vielfachmode-Laserstrahls auf im wesentlichen einen Einzelmode-Strahl,
dadurch gekennzeichnet, daß der Einzelmode-Strahl oberhalb der oberen Fläche (16) der Platte (14) fokussiert wird.

2. Verfahren nach Anspruch 1, bei dem der Einzelmode-Strahl sich in einem TEMoo-Mode befindet.

3. Verfahren nach Anspruch 1 oder Anspruch 2, bei dem die Impulslänge des Strahls kleiner ist als ca. 200 Mikrosekunden.

4. Verfahren nach Anspruch 3, bei dem der gepulste Strahl eine Frequenz von ca. 130 Hz bis ca. 185 Hz hat.

5. Verfahren nach irgendeinem der Ansprüche 1 bis 4, bei dem das unter Druck gesetzte Fluid (52) Sauerstoff ist.

6. Verfahren nach irgendeinem der Ansprüche 1 bis 5, bei dem Spinndüsenkapillaren, welche Schlitze (22) festlegen, in die Platte (14) dadurch geschnitten werden, indem die Platte in wenigstens einem Durchgang relativ zu dem Strahl in einer Bahn bewegt wird, die durch den Schlitz festgelegt ist.

7. Verfahren nach Anspruch 6, bei dem die Platte (14) in wenigstens zwei Durchgängen bewegt wird.

8. Verfahren nach Anspruch 6, bei dem die Platte (14) in wenigstens drei Durchgängen bewegt wird.

## Revendications

1. Un procédé de coupe à travers une plaque métallique (14) ayant des surfaces supérieure et inférieure, qui comprend les étapes consistant à diriger un faisceau de source d'énergie laser, multimode, pulsé (10) vers la surface supérieure (16) de ladite plaque pour créer un bassin de métal fondu entre les surfaces supérieure et inférieure (16, 18) de la plaque, et à expulser le métal fondu de la surface inférieure au moyen d'un fluide pressurisé (52) s'écoulant coaxialement audit faisceau, et à réduire le faisceau laser multimode à sensiblement un faisceau monomode, caractérisée en ce que l'on focalise ledit faisceau monomode au-dessus de la surface supérieure (16) de ladite plaque (14).

2. Le procédé selon la revendication 1, ledit faisceau monomode étant dans un mode TEMoo.

3. Le procédé selon la revendication 1 ou 2, dans lequel la durée d'impulsion dudit faisceau est inférieure à environ 200 microsecondes.

4. Le procédé selon la revendication 3, dans lequel le faisceau pulsé a une fréquence comprise entre environ 130 Hz et environ 185 Hz.

5. Le procédé selon l'une quelconque des revendications 1 à 4, dans lequel ledit fluide pressurisé (52) est de l'oxygène.

6. Le procédé selon l'une quelconque des revendications 1 à 5, dans laquelle des capillaires de filière, définis par des fentes (22), sont découpés dans ladite plaque (14) en déplaçant ladite plaque, en au moins une passe, par rapport au faisceau, selon un trajet défini par ladite fente.

7. Le procédé selon la revendication 6, dans lequel ladite plaque (14) est déplacée en au moins deux passes.

8. Le procédé selon la revendication 6, dans lequel ladite plaque (14) est déplacée en au moins trois passes.

FIG. 1

FIG. 2